# NEUE EUROPÄISCHE PATENTSCHRIFT

(11) **EP 0 576 939 B2**
(45) Veröffentlichungstag und Bekanntmachung des Hinweises auf die Entscheidung über den Einspruch: **07.06.2000**
(45) Hinweis auf die Patenterteilung: 27.12.1995
(21) Anmeldenummer: 93109818.0
(22) Anmeldetag: 19.06.1993
(51) Int. Cl.: E01C 9/00, E01C 5/20, E01F 8/00, E02D 17/20, E04B 2/18, E04C 2/42, E04D 7/00, E04D 11/00

(54) **Aus Kunststoff bestehendes Mehrzweckbauteil**
Plastic multiple use building element
Elément de construction à usage multiple en plastique

(30) Priorität: 25.06.1992 DE 9208359 U
(43) Veröffentlichungstag der Anmeldung: 05.01.1994
(73) Patentinhaber: RPS Recycling Produkte Systeme GmbH, 90518 Altdorf (DE)
(72) Erfinder: Weber, Wolfgang, D-91230 Förrenbach (DE)
(74) Vertreter: Hübner, Gerd, Dipl.-Phys.

(56) Entgegenhaltungen:
- EP-A- 0 420 363
- DE-A- 2 940 236
- DE-U- 8 622 303
- DE-U- 9 109 165
- FR-A- 2 515 232
- FR-A- 2 536 150
- GB-A- 2 162 876
- US-A- 3 775 918
- US-A- 3 960 375
- US-A- 4 160 761
- US-A- 4 671 699

## Beschreibung

Die vorliegende Erfindung betrifft eine aus vorab zerkleinerten und anschließend eingeschmolzenen Kunststoffabfällen bestehende Verlegegitterplatte mit den sonstigen Merkmalen des Oberbegriffs des Patentanspruchs 1.

Aus dem DE-U 86 22 303.8 ist eine Verlegegitterplatte mit Kupplungseinrichtungen in Form von dreieckigen Vorsprüngen bekannt welche in entsprechende Ausnehmungen im zusammengesetzten Zustand der Verlegegitterplatte eingreifen, wodurch eine Randverzahnung, d.h. eine seitliche Verschiebung der Gitterblöcke zueinander verhindert werden soll. Die dort beschriebenen Verlegegitterplatten können jedoch nicht bereits vor der Verlegung zu größeren Flächen verbunden und anschließend im Verbund verlegt werden. Außerdem gewährleistet die Art der Verbindung der Verlegegitterplatten keine Höhenverriegelung von miteinander bereits gekoppelten und benachbarten Verlegegitterplatten.

Aus der FR-A- 25 36 150 ist desweiteren eine Gitterplatte mit einer wabenförmigen Struktur bekannt, welche keine Längs- und Querstreben aufweist. Hierdurch werden jeweils benachbarte Seiten der Gitterplatte unterschiedlich sowohl hinsichtlich der Kontur als auch der Kupplungselemente ausgebildet. Dies bedeutet, daß lediglich aufeinander abgestimmte und zueinander passende Seiten miteinander verbunden werden können. Für Eckverbindungen müssen beispielsweise entsprechende unterschiedliche Zubehörteile zwangsläufig bevorratet werden. Die vorgeschlagene Gitterplatte ermöglicht desweiteren keine Höhenverriegelung miteinander gekoppelter benachbarter Gitterplatten, da die betreffenden Hakenteile lediglich in die hierfür vorgesehenen Ausnehmungen eingeschoben werden, um die Gitterplatten in der Fläche aneinander zu halten.

Die Aufgabe der vorliegenden Erfindung besteht nun darin, eine Verlegegitterplatte zu schaffen, welche verbesserte Kupplungseinrichtungen aufweist und eine Höhenverriegelung miteinander gekoppelter, benachbarter Bauteile ermöglicht. Außerdem soll ein Verfahren zur kostengünstigen Verlegung derartiger Verlegegitterplatten angeboten werden.

Die Aufgabe wird hinsichtlich der Verlegegitterplatte durch den kennzeichnenden Teil des Patentanspruchs 1 gelöst. Vorteilhafte Ausführungsformen der Erfindung sind durch die Unteransprüche 2- 24 realisiert.

Hinsichtlich des Verfahrens wird die Aufgabe durch den kennzeichnenden Teil des Patentanspruchs 25 gelöst. Eine vorteilhafte Variante des Verfahrens im Unteranspruch 26 erläutert.

Die Verlegegitterplatte (im folgenden Bauteil genannt) wird hierbei gleichsam als Baustein eines Baukastensystems verwendet, wobei es unterschiedlichsten Einsatzzwecken zugänglich ist. Das Bauteil kann als Bestandteil eines Raumteilers oder beispielsweise als Begrünung, insbesondere zur Dachbepflanzung eines Hauses, einer Garage oder eines Parkplatzes verwendet werden. Hierzu wird das Bauteil z.B. auf dem Dach installiert und anschließend mit Kies und Erde gefüllt und bepflanzt. Die Quer- sowie Längsstreben in Verbindung mit dem Außenrahmen bewirken eine hohe Steifheit des Bauteils und damit eine besonders gute Trittfestigkeit. Desweiteren kann das Bauteil ebenso gut auch als Teil einer Straßengraben- oder Wallbepflanzung dienen, wobei eine Unterspülung oder Abspülung von Bepflanzungen im Bereich eines Erdwalls oder eines Straßengrabens wirksam vermieden werden. Das erfindungsgemäße Bauteil läßt sich aufgrund dessen besonderer Form spritztechnisch unter Verwendung von Kunststoffabfall einfach herstellen.

Das erfindungsgemäße Bauteil weist eine besondere Kupplungseinrichtung auf welche bereits während des Formgebungsvorgangs mitgeformt werden kann und gleichzeitig eine besonders einfache Möglichkeit der Verbindung einzelner Bauteile miteinander gewährleistet. Hierzu ist es lediglich notwendig, zwei Bauteile an ihren gemeinsamen Seitenflächen am jeweiligen Hakenteil und der Durchführung zusammenzustecken.

Zur Vermeidung der Höhenbewegung einzelner miteinander verbundener Bauteile z.B. bei punktueller Belastung des Bauteilverbunds sind Mittel zur Höhenverriegelung miteinander gekoppelter und benachbarter Bauteile vorgesehen, wodurch der Zusammenhalt des Bauteilverbunds wesentlich erhöht wird.

Zweckmäßigerweise besitzt das erfindungsgemäße Bauteil als Mittel zur Höhenverriegelung mindestens einen Vorsprung, welcher bei miteinander gekoppelten Bauteilen in mindestens eine Ausnehmung eingreift. Dieser Vorsprung ist beim Lösen der Verriegelung durch gegenläufiges Verschieben zweier benachbarter Bauteile aus der Ausnehmung herausdrückbar. Vorsprung und Ausnehmung sind im Bereich der Kupplungseinrichtung des jeweiligen Bauteils angeordnet. Diese Ausgestaltung erweist sich als wirksame Lösung zur Gewährleistung einer Höhenverriegelung, wobei Vorsprung und Ausnehmung als integrale Bestandteile schon während des Formgebungsprozesses in das Bauteil mit eingeformt werden können. Die an der Unterseite des erfindungsgemäßen Bauteils verteilten Anformungen verleihen dem aus einzelnen Bauteilen bestehenden Verbund eine besonders hohe Verrutschfestigkeit d.h. Lagestabilität und ermöglicht ferner einen wirksamen Ablauf von Regenwasser

Um eine begehbare oder befahrbare Fläche zu erzeugen, ist bei einer zweckmäßigen Ausgestaltung der vorliegenden Erfindung vorgesehen, daß die Längs- und Querstreben zumindest mit der begehbaren Oberseite des Rahmens bündig abschließen.

Eine besonders gute Trittfestigkeit oder Befahrfestigkeit bei Belastung der Verbindungsstellen zweier Bauteile wird dadurch gewährleistet, daß zumindest die Unterseite des Hakenteils mit der Unterseite des Außenrahmens bündig abschließt.

Zweckmäßigerweise ist an der Unterseite eines jeden Hakenteils mindestens eine Anformung vorgesehen, wobei sämtliche Anformungen des jeweiligen Bauteils in einer Ebene liegen sollen.

Dadurch, daß die Ausnehmung im Bereich einer an der Innenseite des Außenrahmens ausgebildeten Erhöhung liegt, wird bei einfacher Konstruktion eine gute Verriegelungswirkung erzielt.

Der Gegenstand des Anspruchs 8 bedingt eine spritz-gießtechnische bzw. formtechnische Vereinfachung.

Sofern das Bauteil als Bodenbauelement für den Innenausbau verwendet werden soll, können längs- oder querverlaufende Ausnehmungen vorgesehen sein, die eine wirksame Kabelführung im Bereich des Bauteilverbunds gewährleisten. Derartige Ausnehmungen lassen sich ebenfalls formtechnisch problemlos einbringen.

Gemäß Anspruch 10 weist eine weitere Ausgestaltung des Erfindungsgemäßen Bauteils die Besonderheit auf, daß die einzelnen Durchführungen bezüglich der Tiefe gegeneinander versetzt angeordnete Quervorsprünge aufweisen, wodurch das Bauteil als Schallschutzbauteil oder schallschützende Trennwand verwendet werden kann.

Wird das Bauteil als Bestandteil einer Straßengrabenbefestigung oder Wallbepflanzung verwendet, ist zweckmäßigerweise in mindestens einer Durchführung eine Halterung miteingeformt, die eine Durchführung aufweist, in die ein Erdanker oder dgl. eingebracht werden kann.

Gemäß der Ausgestaltung nach Anspruch 12 sind einzelne Durchführungen an ihrer Oberseite mit einer Abdeckung versehen, was die Möglichkeit mit sich bringt, einzelne Display- oder Werbeflächen vorzusehen, sofern das Bauteil beispielsweise als Raumteiler verwendet wird.

Zur Erhöhung des Zwischenraums zwischen der Unterseite des jeweiligen Bauteils und der Bodenfläche sind gemäß Anspruch 13 Abstandshülsen vorgesehen, die auf die an der Unterseite vorherrschenden Anformungen aufsteckbar sind. Wird das Bauteil z.B. als Bestandteil einer Taubenstallauslegung verwendet, kann durch diese Maßnahme der Abstand der unteren Kante von der Oberseite der Bodenfläche variiert werden, um hierdurch z.B. am Boden befindliches Futter für Tauben nicht mehr zugänglich zu machen.

Der Gegenstand des Anspruchs 14 hat den Vorteil, daß durch Verwendung des Verbindungselements die Möglichkeit besteht, abgewinkelte Verbundflächen, beispielsweise für eine Garageneinfahrt oder dgl. herzustellen.

Der Gegenstand von Anspruch 15 bietet den Vorteil, daß das Verbindungselement eine wirksame Verbindung von Bauteilanordnungen ermöglicht, die zueinander in schräg verlaufenden Ebenen angeordnet sind, wie dies beispielsweise bei einer Straßengrabenbepflanzung der Fall ist.

Um zu vermeiden, daß bei der Verwendung des Bauteils als Dachbepflanzungselement oder als Dachterrassenauslegung durch eingefüllten Kies oder Schotter bei Belastung ein unbeabsichtigtes Anheben des Verbundes eintritt, ist gemäß Anspruch 16 zweckmäßigerweise vorgesehen, daß das Bauteil eine über die gesamte Fläche quer verlaufende Zwischenwandung aufweist, die einen unteren Hohlraum bildet und in der mindestens eine Entwässerungsöffnung vorgesehen ist. Die Zwischenwandung verhindert, daß sich der Kies bei Belastung zwischen Unterboden und unterer Seite des jeweiligen Bauteils einschiebt und so eine unbeabsichtigte Höhenpositionsveränderung bewirkt wird.

Weiterhin ist gemäß Anspruch 17 vorgesehen, daß die Markierung der oberen Seite des jeweiligen Bauteils über in die einzelnen Durchführungen des Bauteils einsteckbare Markierungsteile erfolgt. Hierdurch können Parkplatzmarkierungen oder Begehungsmarkierungen in einfacher Weise am Bauteil vorgenommen werden. Das Markierungsteil selbst kann ebenfalls aus dem eingeschmolzenen Kunststoffmaterial aufgrund seiner einfachen Form hergestellt werden und leistet damit ebenfalls einen Beitrag zur Entsorgung.

Die Fixierung des Markierungsteils innerhalb der Durchführung erfolgt zweckmäßigerweise durch einfache Klemmung oder eine Nut/Federverbindung.

Der Gegenstand der Ansprüche 19 und 20 bewirkt jeweils, daß die Bauteile im Verbund an sich bereits als sogenannte Paletten geformt werden können, ohne daß zusätzliche, übliche Holzpaletten verwendet werden müssen. Eine Vertikalverbindung einzelner Bauteilverbunde ist aufgrund der Durchführung mittels eines oder mehrerer Spannbänder in verblüffend einfacher Weise möglich. Die Bereitstellung sowie der Transport der Bauteile ist daher möglich, ohne daß zusätzliche Transporthilfsmittel notwendig sind.

Ferner wird mit der vorliegenden Anmeldung ein Verfahren zum Verlegen der Bauteile beansprucht, welches dadurch gekennzeichnet ist, daß die Bauteile vor dem Verlegen einzeln oder im Verbund besäht oder begrünt werden und erst anschließend im besähten oder begrünten (bewachsenem) Zustand verlegt werden. Dies hat den Vorteil, daß beispielsweise bei zu verlegenden Parkplatzflächen letztere gleichsam "über Nacht" mit einem Bewuchs (Begrünung) versehen sind und noch dazu sofort befahren werden können. Ferner sind die Kosten eines auf diese Art und Weise begrünten Parkplatzes im Vergleich zum konventionellen Begrünen erheblich geringer. Der Vorteil einer derartig begrünten Parkplatzfläche liegt darüber hinaus in der enorm hohen Belastungsfähigkeit, die die gesetzlich vorgeschriebenen Werte für Feuerwehreinfahrten (100 t/m²) mit Werten von 350 bis 500 t/m² erheblich übertrifft. Letztendlich hat eine derart begrünte Fläche auch den Vorteil, daß durch den Bauteilverbund die Grünfläche einem erhöhten Schutz bei intensiver mechanischer Belastung ausgesetzt ist. Die bereits begrünten Bauteilverbunde können in Quadratmeterflächen oder dgl. für die Verlegung bereitgehalten werden.

Zweckmäßigerweise sind die Bauteile aufgrund ihres Materials gemäß Anspruch 24 in der Lage, durch Beschnitt den örtlichen Gegebenheiten angepaßt zu werden. Beispielsweise kann ein Bauteil mit einem Ausschnitt oder Abschnitt versehen werden, um eine Begrünung entlang eines Kanaldeckels oder dgl. vorzusehen.

Zweckmäßigerweise kann die Kunststoffmasse einen zusätzlichen Anteil an Pappabfällen aufweisen.

Die Erfindung bietet damit einen erheblichen Entsorgungseffekt, dadurch, daß die eingangs erwähnten Kunststoffabfälle voll recyclebar werden. Gleichzeitig wird durch die Verwendung dieser Kunststoffe eine hohe mechanische Stabilität sowie Säurebeständigkeit und Witterungsbeständigkeit des Bauteils gewährleistet.

Das Dehnfugenelement bewirkt einen Ausgleich von durch Temperaturschwankungen bedingte Ausdehnungen der Bauteilanordnung und dadurch eine Vermeidung von nachteiligen Beeinträchtigungen derselben.

Durch die besondere Form der Querschnittsfläche von Quer und/oder Längsstreben werden ungünstige Kräfteverhältnisse während der Belastung der Bauteilanordnung vermieden, d. h. es entsteht kein unerwünchter Hebedruck der Bauteilanordnung bei Belastung. Ferner sind die Auflagenflächen vergrößert und es wird eine einfache Befüllung der Bauteilanordnung sichergestellt.

Zweckmäßige Ausgestaltungen der vorstehenden Erfindung werden nachstehend anhand der Zeichnungsfiguren näher erläutert. Es zeigen:
- Fig. 1: eine Ausgestaltung eines erfindungsgemäßen Bauteils beispielsweise zum Einsatz für eine Dachbepflanzung eines Hauses in Unteransicht;
- Fig. 2: eine Schnittdarstellung gemäß der Linie I - I in Fig. 1, wobei die Schnittdarstellung im Vergleich zu Fig. 1 um 180° gedreht dargestellt ist;
- Fig. 3: eine weitere Ausgestaltung des erfindungsgemäßen Bauteils als Bestandteil einer Wall- oder Straßengrabenbefestigung ebenfalls in Unteransicht;
- Fig. 4: eine weitere Ausgestaltung der erfindungsgemäßen Erfindung unter Darstellung verschiedener Einsatzmöglichkeiten ebenfalls in Unteransicht;
- Fig. 5: eine Schnittdarstellung entlang der Linie II - II in Fig 4;
- Fig. 6: ein Verbindungselement in Draufsicht und stark vereinfachter Darstellungsweise zur winkligen Verbindung zweier benachbarter Bauteile;
- Fig. 7: ein weiteres Verbindungselement in Schnittdarstellung zur Verbindung zweier in unterschiedlichen Ebenen befindlichen Bauteilen;
- Fig. 8: eine detaillierte Ausgestaltung des Hakenteils;
- Fig. 9: eine Draufsicht auf die Innenseite des Außenrahmens im Bereich der Durchführung;
- Fig. 10: eine Seitenansicht entlang der Schnittlinie III - III der Ausgestaltung von Fig. 9;
- Fig. 11: eine Darstellung des Markierungsteils zur Markierung des Bauteilverbunds;
- Fig. 12: einen per Gabelstapler transportierbaren Verbund einzelner Bauteile;
- Fig. 13: einen zum Verlegen vorbereiteten Stapel von begrünten Bauteilen sowie
- Fig. 14: eine schematische Darstellung eines im Verbund befindlichen Bauteils, insbesondere für den Einsatz als mit Schotter oder Kies zu befüllende Dachauslegung.
- Fig. 15: eine Draufsicht auf ein Dehnfugenelement für den Ausgleich von temperaturbedingten Dehnungen des Bauteilverbunds;
- Fig. 16: eine vereinfachte schematische Darstellungsweise zweier Längsstreben im Querschnitt;

Identische Bezugsziffern kennzeichnen identische Merkmale in den einzelnen Figuren. Der Übersichtlichkeit halber wurden Merkmale, die in den einzelnen Figuren mehrfach vorkommen, lediglich einmal mit der betreffenden Bezugsziffer gekennzeichnet.

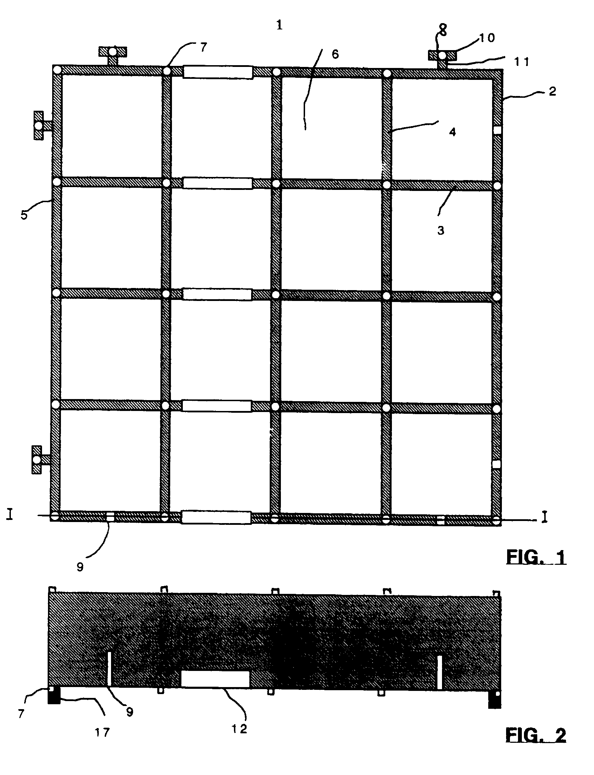

Bezugsziff. 1 in Fig. 1 beschreibt das erfindungsgemäße Bauteil in seiner Gesamtheit. Das Bauteil umfaßt einen Außenrahmen 2, welcher quadratische Form besitzen kann. Dieser Außenrahmen 2 steht an seiner Innenseite mit einer Mehrzahl von Querstreben 3 sowie Längsstreben 4 in Verbindung, die das Bauteil 1 in eine Vielzahl von einzelnen Zellen, d.h. Durchführungen 6 aufteilen.

An jedem Kreuzungspunkt zwischen Außenrahmen 2, Querstrebe 3 sowie Längsstrebe 4 befindet sich eine Anformung, wobei die Anformungen sämtlich an der Unterseite des Bauteils 1 angeordnet sind.

An der in Fig. 1 linken und oberen Seitenfläche 5 befinden sich Hakenteile 8, die jeweils einen Querfortsatz 10 aufweisen, der mit der Seitenfläche 5 über einen Längsfortsatz 11 in Verbindung steht.

Auch die Hakenteile 8 sind an ihrer Unterseite mit je einer Anformung 7 versehen. An den den jeweiligen Hakenteilen 8 gegenüberliegenden Seitenflächen 5 sind lagegleich zu den Hakenteilen 8 jeweils Durchführungen 9 vorgesehen, die im Fall der Ausgestaltung gemäß Fig. 1 zur Unterseite hin offen ausgebildet sind (vgl. auch Fig. 2). Diese Konstruktion gewährleistet, daß zwei Bauteile an ihren gemeinsamen Seitenflächen am jeweiligen Hakenteil 8 und der Durchführung 9 zusammengesteckt werden können.

Die Anordnung der einzelnen Durchführungen wird aus Fig. 2 deutlich. Fig. 2 ist eine Schnittdarstellung entlang der Linie I - I der Darstellung aus Fig. 1.

Gemäß Fig. 2 verlaufen die Durchführungen 9 von der Unterseite her offen in die Seitenfläche 5 hinein. Darüber hinaus ist an der Unterseite eine Ausnehmung 12 vorgesehen, die bei der Verwendung des Bauteils als Bestandteil eines Bodenbelags die Möglichkeit der Führung von Kabeln und dgl. gewährleistet.

Wird das Bauteil als Bestandteil des Bodenbelags eines Stalls verwendet, können zweckmäßigerweise Abstandshülsen 17 vorgesehen sein, die den Abstand zwischen Unterseite des Bauteils 1 sowie Aufstellebene veränderbar machen. Die Abstandshülsen 17 sind vorzugsweise auf die an der Unterseite vorliegenden Anformungen aufsteckbar.

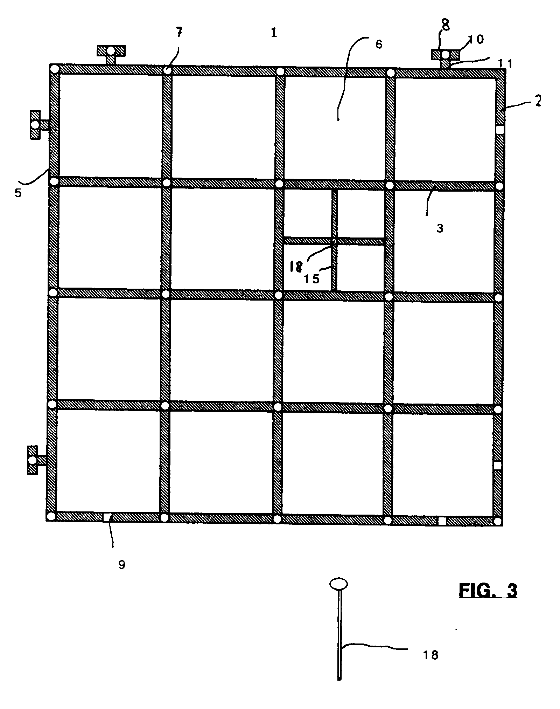

Die Darstellung gemäß Fig.3 unterscheidet sich lediglich in dem zusätzlichen Merkmal einer Halterung 15, die in einer Durchführung 6 angeordnet ist. Die Halterung 15 weist eine Bohrung auf, durch die hindurch ein Erdanker oder Befestigungsstift 18 geführt werden kann, welcher dazu dient, das Bauteil 1 bei Verwendung zur Erdwallbefestigung, Straßengrabenbefestigung oder auch zur Befestigung von Hauseinfahrten, Parkplätzen etc. fest mit dem Untergrund zu verbinden.

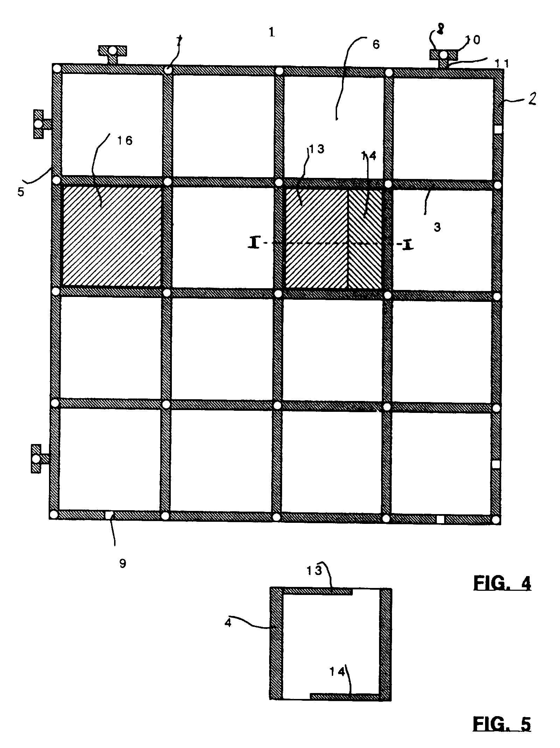

Gemäß Fig. 4 ist vorgesehen, einzelne Durchführungen 6 mit einer Abdeckung 16 zu verschließen, die bei Verwendung des erfindungsgemäßen Bauteils 1 als Displayfläche zu verwenden ist, d.h. mit Werbeaufdrucken oder dgl. versehen sein kann.

Der Einfachheit halber ist in Fig. 4 eine weitere, von der obigen Ausgestaltung unabhängige Abwandlung dargestellt, die darin besteht, daß sämtliche Durchführungen 6 bezüglich ihrer Tiefe gegeneinander versetzt angeordnete Quervorsprünge 13 und 14 aufweisen, welche eine Schallschluckfunktion gewährleisten. Der Übersichtlichkeit halber ist in Fig. 4 lediglich eine Durchführung mit den betreffenden Quervorsprüngen 13 und 14 dargestellt.

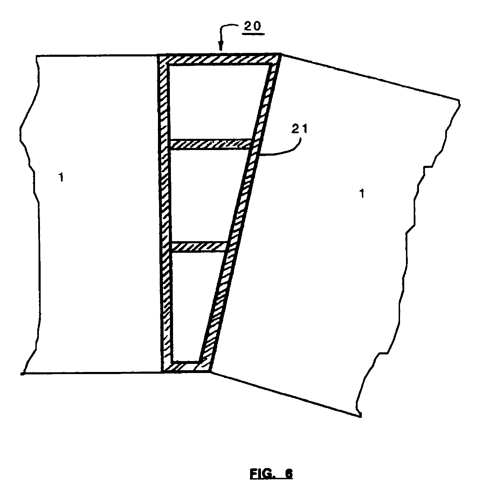

Die Quervorsprünge können gemäß Fig. 5 direkt mit der Ober-sowie Unterseite des Bauteils abschließen oder aber in alternativer Ausführungsform auch im Innenbereich, d.h. zwischen der Ober- und Unterkante des Bauteils 1 angeordnet sein.

Gegenstand der Erfindung sind weiterhin Verbindungselemente zur Verbindung zweier benachbarter Bauelemente 1 sowie z.B. 1'. Das Verbindungselement 20 gem. Fig. 6 verbindet zwei benachbarte Bauteile 1 derart, daß diese in einem gewissen Winkel zueinander angeordnet sind. Das Verbindungselement 20 ist hierzu keilartig ausgebildet und an seinen Seitenflächen 21 mit entsprechenden Kupplungseinrichtungen der eingangs bereits beschriebenen Art versehen. Die Kupplungselemente sind in Fig. 6 der Übersichtlichkeit halber nicht dargestellt.

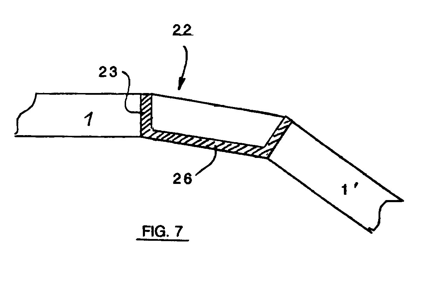

Aus Fig. 7 ist ein weiteres Verbindungselement 22 dargestellt, welches dazu dient, zwei Bauteile 1 sowie z.B. 1' zu verbinden, die in unterschiedlich zueinander geneigter Ebene angeordnet sind, beispielsweise für den Einsatz als Straßengrabenbefestigung. Hierzu weist das Verbindungselement 22 von der Grundfläche 26 schräg verlaufende Seitenflächen 23 auf, die wiederum mit (der Übersichtlichkeit halber nicht dargestellten) vorher beschriebenen Kupplungseinrichtungen versehen sind und eine Verbindung benachbarter Bauteile 1 gewährleisten.

Die verschieden ausgebildeten Verbindungselemente 20 bzw. 22 bewirken eine innige Verzahnung der auch in unterschiedlichen Ebenen bzw. in unterschiedlichen Winkeln zueinander angeordneten Bauteile und damit eine erhebliche Stabilitätserhöhung des gesamten Bauteilverbundes. Beispielsweise können bei der Verwendung der Bauteile als Wallbepflanzung die schräg verlaufenden Bauteile der Wallbepflanzung über entsprechend ausgebildete Verbindungselemente in am Fuß des jeweiligen Walls angeordnete Bauteile übergehen. Hierdurch wird im übrigen auch eine gewisse Lagestabilität des gesamten Bauteilverbundes gewährleistet.

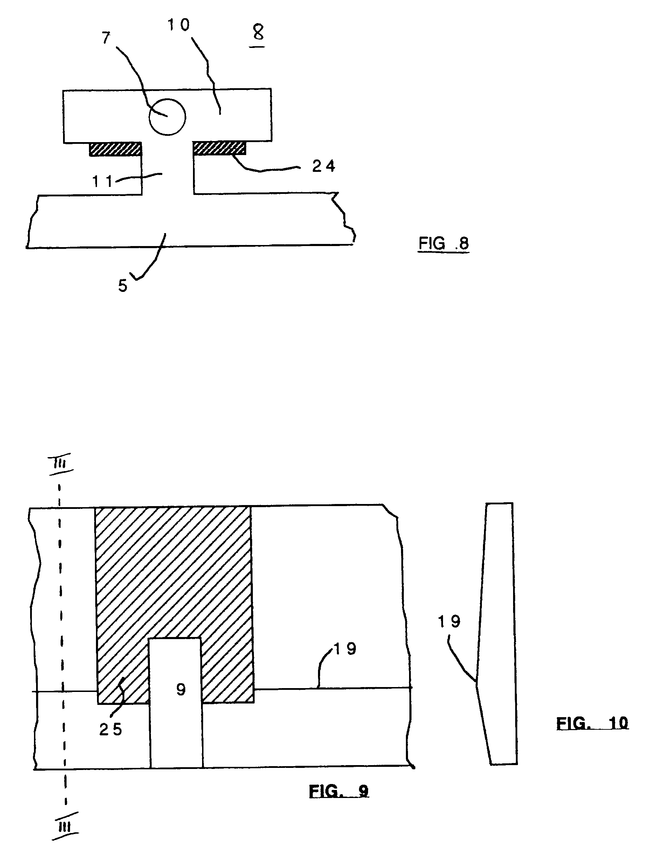

Desweiteren besitzt gemäß Fig. 8 jedes Hakenteil 8 zur Seitenfläche 5 hin verlaufende, an der Innenseite des Querfortsatzes 10 angeordnete Vorsprünge 24, die mit einer am benachbarten Bauteil 1 lagegleich angeordneten Ausnehmung 25 zusammenwirken, derart, daß eine Verriegelung hinsichtlich der Höhenbeweglichkeit zweier benachbarter Bauteile erzielt wird.

Wie aus Fig. 9 deutlich wird, verläuft die Ausnehmung 25 von der der Durchführung 9 abgewandten Seitenkante des Außenrahmens 2 nach innen und endet - wie aus Fig. 10 deutlich wird - in etwa im Bereich der Erhöhung 19.

Das benachbarte Bauteil wird zur Verbindung mehrerer Bauteile zu einem Bauteilverbund mit seinem Hakenteil und den daran angeordneten Vorsprüngen 24 von der offenen Seite der Durchführung 9 mit gewisser Kraftanstrengung aufgeschoben, wobei die Vorsprünge 24 anschließend in die Ausnehmung 25 an derem vorderen Ende eingreifen, die Verriegelung der Höhenbeweglichkeit zweier benachbarter Bauteile damit herstellen und nur mit erhöhtem Kraftaufwand wieder entriegelt werden können. Diese Höhenverriegelung ist an jedem Hakenteil und entsprechender Ausnehmung am Bauteil vorgesehen.

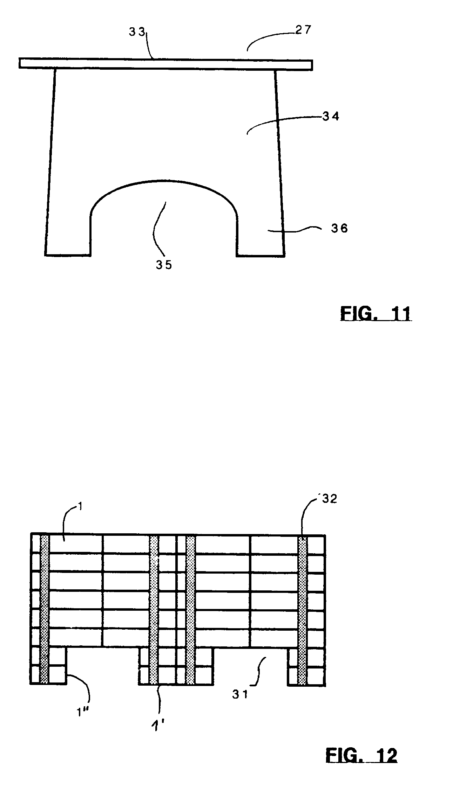

Fig. 11 bezeichnet ein Markierungsteil 27, welches von oben in die jeweilige Durchführung 6 des Bauteils 1 eingeschoben werden kann. Hierdurch lassen sich z.B. Parkplatzmarkierungen oder sonstige Markierungen am Bauteilverbund vornehmen. Das Markierungsteil 27 umfaßt ein plattenförmiges Oberteil 33, welches mit einem unterseitigen Fortsatz 34 verbunden ist. Der Fortsatz hat eine nach unten sich erweiternde geringfügige Konizität und weist insgesamt vier durch an den vier Seiten vorgesehenen Ausnehmungen 35 gebildete Vorsprünge 36 auf, die beim Einschieben des Markierungsteils 27 in die jeweilige Ausnehmung 6 aufgrund ihrer Federwirkung und der Konizität des unteren Fortsatzes 34 festklemmen und einen sicheren Halt des Markierungsteils 27 im Bauteil gewährleisten. Das Markierungsteil 27 besteht ebenfalls aus Kunststoff unter Verwendung von Kunststoffrecyclingmaterial, wie es auch zur Herstellung des Bauteils 1 verwendet wird. Zweckmäßigerweise ist der Kunststoff weiß oder mit einer Signalfarbe eingefärbt.

Fig. 12 zeigt einen transportablen Verbund einer Mehrzahl einzelner Bauteile 1. Der Verbund besteht aus mehreren aufeinanderliegenden Schichten einzelner miteinander verbundener Bauteile 1. An der Unterseite sind weitere Bauteile 1', 1'' vorgesehen, die auf einer bzw. beiden Seiten eine im Vergleich zum Bauteil 1 halbe Seitenlänge aufweisen. In diesem Zusammenhang ist entscheidend, daß an der Unterseite des Gesamtverbundes Zwischenräume 31 entstehen, in die ein Gabelstapler oder dgl. eingreifen kann. Die Verwendung zusätzlicher, herkömmlicher Transportpaletten wird hierdurch vermieden. Der Verbund der einzelnen Bauteile wird in vertikaler Ausrichtung durch mehrere Spannbänder 32 gewährleistet, die so angeordnet sein können, daß sie insbesondere auch durch die einzelnen Durchführungen 6 der Bauteile 1 hindurchgreifen. Hierdurch lassen sich die Bauteile 1 unmittelbar nach der Herstellung transportfertig lagern. Außer den jeweiligen Spannbändern 32 werden keine zusätzlichen Teile benötigt.

Erfindungsgemäß werden die Bauteile zur Begrünung einer Fläche, beispielsweise eines Parkplatzes, einer Garageneinfahrt oder einer sonstigen mit den Bauteilen auszulegenden Fläche vorab mit Erde, Torf oder dgl. befüllt, anschließend besäht. Die Bauteile sind zu diesem Zweck im Verbund eindimensional auszulegen und werden anschließend, so bald die Begrünung aufgegangen ist und eine gewisse Verfestigung der in den Durchführungen befindlichen Erde durch die Verwurzelung der Begrünung eingetreten ist, zu transportfähigen Stapeln zusammengestellt, in dieser Weise transportiert und vor Ort durch Verbindung der vorab begrünten Bauteile bzw. Bauteilverbunde ausgelegt.

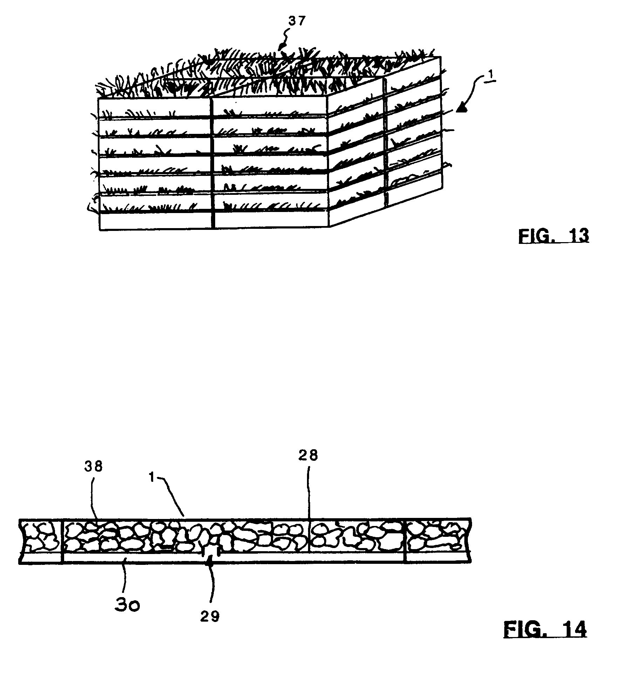

Fig. 13 zeigt einen derartigen, transportfähigen Stapel einzelner begrünter Bauteilverbunde, in diesem Fall besteht ein Bauteilverbund aus vier miteinander verbundenen Bauteilen 1. Bezugsziffer 37 kennzeichnet die Begrünung der einzelnen Bauteile, beispielsweise in Form eines Rasens oder dgl. Es schadet nicht, wenn die begrünten Bauteilverbunde kurzzeitig für den Transport aufeinandergestapelt werden.

Fig. 14 zeigt - in vereinfachter schematischer Darstellungsweise - ein erfindungsgemäßes Bauteil 1, welches eine durchgehende, waagrechte Zwischenwandung 28 aufweist, durch die ein Hohlraum 30 gebildet wird und die verhindern soll, daß bei der Befüllung des Bauteils mittels Kies 38 der Kies bei Belastung sich zwischen die unteren Auflageflächen des Bauteils 1 und den Untergrund schiebt und hierdurch ein Anheben des Bauteilverbunds verursacht. Zur Gewährleistung eines Wasserablaufs kann mindestens eine Entwässerungsöffnung 29 in der Zwischenwandung 28 vorgesehen sein. Der Übersichtlichkeit halber sind die einzelnen Querstreben sowie Längsstreben des Bauteils in Fig. 13 und 14 nicht dargestellt. Gleiches gilt für die Hakenteile zur Verbindung der einzelnen Bauteile.

Als Material des Bauteils oder Verbindungselements wird erfindungsgemäß ein Kunststoff aus vorab zerkleinerten und anschließend eingeschmolzenen Kunststoffabfällen verwendet, welches in eine Form spritz- oder gießbar ist. Es handelt sich hierbei regelmäßig um Abfälle bestehend vor allem aus granuliertem oder gemahlenem Polyäthylen (Nieder- und Hochdruck-PE) oder Polypropylen, welche nicht mehr verblasen werden können aber dennoch noch spritz- bzw. gießfähig sind. Die Kunststoffmasse kann ferner einen Anteil an Pappabfällen aufweisend, welcher dazu geeignet ist, das Gewicht des erfindungsgemäßen Bauteils spürbar zu vermindern.

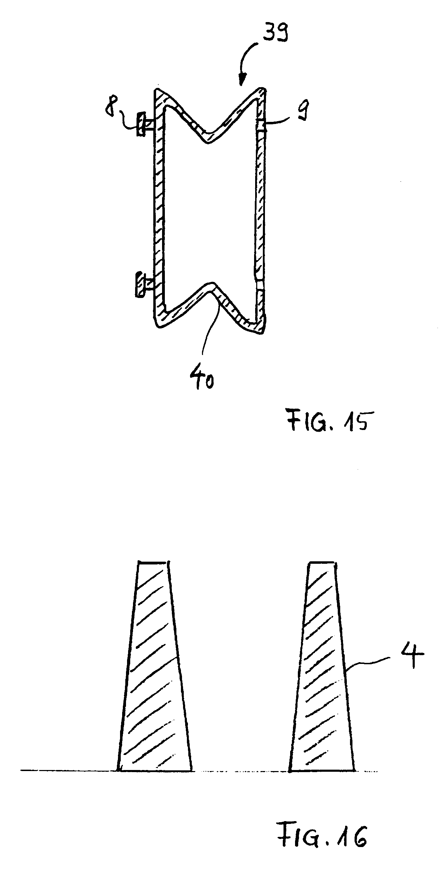

Figur 15 zeigt ein Dehnfugenelement 39, welches über die Hakenteile 8 der bekannten Art in den Verbund einzelner Bauteile integriert wird. Das Dehnfugenelement 39 ist vergleichsweise schmal ausgebildet und weist an seinen Stirnseiten Einformungen 40 auf, die bewirken, daß das Dehnfugenelement 39 bei seitlicher Belastung wie eine Feder oder ein Stoßdämpfer wirkt. Das Dehnfugenelement 39 wird zweckmäßigerweise in der gleichen Art und Weise hergestellt wie das Bauteil 1. Das Dehnfugenelement gleicht durch Temperaturschwankungen bedingte Ausdehnungen der Bauteilanordnung aus, wodurch nachteilige Beeinträchtigungen vermieden werden.

Zweckmäßigerweise wird über die gesamte Breite der Bauteilanordnung ein Abschnitt bestehend aus mehreren nebeneinander angeordneten Dehnfugenelementen 39 vorgesehen.

Die Querstreben 3 und die Längsstreben 4 besitzen gemäß Fig. 16 einen von der Standfläche nach oben sich erstreckenden verjüngenden Querschnitt. Hierdurch wird zum einen ein problemloses Auffüllen der Bauteile mit Erde, Sand oder dgl. gewährleistet. Darüber hinaus wird ein Anheben des z.B. mit Erde befüllten Bauteilverbundes aufgrund von ungünstigen Kräfteverhältnissen während der Belastung bei dieser Ausgestaltung vermieden, d.h., es entsteht bei Belastung kein unerwünschter Hebedruck. Ferner sind die Auflageflächen im Vergleich zu bekannten Bauteilen vergrößert und der Bauteilverbund läßt sich einfacher befüllen. Die besondere Form der Querstreben 3 sowie Längsstreben 4 bieten darüber hinaus den Vorteil, daß bereits vorbepflanzte Bauteilverbunde einfacher handzuhaben sind und die Bepflanzung innerhalb des Bauteilverbundes bzw. der Bauteilanordnung nicht ohne weiteres hindurchfallen kann. Die Herstellung dieser besonderen Bauteile erfolgt in der Weise, daß das Bauteil hinsichtlich seiner gesamten Tiefe in einer Formhälfte hergestellt wird und die weitere Formhälfte lediglich den Abschlußdeckel bildet.

### BEZUGSZEICHENLISTE

- 1: Bauteil
- 1': Bauteil
- 1'': Bauteil
- 2: Außenrahmen
- 3: Querstrebe
- 4: Längsstrebe
- 5: Seitenfläche
- 6: Durchführung
- 7: Anformung
- 8: Hakenteil
- 9: Durchführung
- 10: Querfortsatz
- 11: Längsfortsatz
- 12: Ausnehmung
- 13: Quervorsprung
- 14: Quervorsprung
- 15: Halterung
- 16: Abdeckung
- 17: Abstandshülse
- 18: Bohrung
- 19.: Erhöhung
- 20: Verbindungselement
- 21: Seitenfläche
- 22: Verbindungselement
- 23: Seitenfläche
- 24: Vorsprung
- 25: Ausnehmung
- 26: Grundfläche
- 27: Markierungselement
- 28: Zwischenwandung
- 29: Entwässerungsöffnung
- 30: Hohlraum
- 31: Zwischenraum
- 32: Spannband
- 33: plattenförmiges Oberteil
- 34: unterer Fortsatz
- 35: Ausnehmung
- 36: Vorsprung
- 37: Begrünung
- 38: Kies
- 39: Dehnfugenelement
- 40: Einformung

## Patentansprüche

1. Verlegegitterplatte aus vorab zerkleinerten und anschließend eingeschmolzenen Kunststoffabfällen, die in eine entsprechende Form spritz- oder gießbar sind, mit einem umlaufenden Außenrahmen (2), an dessen Seitenflächen (5) jeweils mindestens eine Kupplungseinrichtung zur Verbindung zweier benachbarter Gitterplatten vorgesehen ist und mit Quer- (3) als auch Längsstreben (4), die das Innere des Außenrahmens (2) in ein Raster einzelner zellenartiger Durchführungen (6) aufteilen, wobei als Kupplungseinrichtung an je einer Außenseite des Außenrahmens (2) mindestens ein Hakenteil (8) und lagegleich an der dem Hakenteil (8) gegenüberliegenden Seite eine zur Ober- oder Unterseite hin offene Durchführung (6) ausgebildet ist und die (Gitterplatte (1) als Mittel zur Höhenverriegelung mindestens einen Vorsprung (24) aufweist,
**dadurch gekennzeichnet**,
- daß das Hakenteil (8) aus einem Querfortsatz (10) und einem Längsfortsatz (11) besteht, wobei der Längsfortsatz (11) den Querfortsatz (10) mit dem Außenrahmen (2) verbindet und bei miteinander gekoppelten Bauteilen der Längsfortsatz (11) durch die Durchführung (6) hindurch verläuft und der Querfortsatz (10) an der Innenseite des Außenrahmens (2) angreift, und
- daß der oder die Vorsprünge (24) an der Innenseite des Querfortsatzes (10) angeordnet sind und bei miteinander gekoppelten Gitterplatten in jeweils eine Ausnehmung (25) an der Innenseite des Außenrahmens (2) eingreifen, wobei der Vorsprung (24) beim Lösen der Verriegelung durch gegenläufiges Verschieben zweier benachbarter Gitterplatten aus der Ausnehmung (25) herausdrückbar ist und Vorsprung (24) und Ausnehmung (25) im Bereich der Kupplungseinrichtung des jeweiligen Bauteils angeordnet sind.

2. Verlegegitterplatte nach Anspruch 1,
**dadurch gekennzeichnet,**
daß Anformungen (7) flächig verteilt in Bereich einer Hauptfläche des Bauteils (1) an den Kreuzungspunkten der Quer- (3), Längsstreben (4) und Außenrahmen (2) vorgesehen sind.

3. Verlegegitterplatte nach Anspruch 1 oder 2,
**dadurch gekennzeichnet**,
daß die Anformungen (7) an den Kreuzungspunkten der Quer- (3), Längsstreben (4) und Außenrahmen (2) vorgesehen sind.

4. Verlegegitterplatte nach den Ansprüchen 1 - 3,
**dadurch gekennzeichnet**,
daß die Quer- (3) und Längsstreben (4) mit der Ober- oder Unterseite des Außenrahmens (2) bündig abschließen.

5. Verlegegitterplatte nach einen der vorhergehenden Ansprüche,
**dadurch gekennzeichnet**,
daß zumindest die Unterseite des Hakenteils (8) mit der Unterseite des Außenrahmens (2) bündig abschließt.

6. Verlegegitterplatte nach einem der vorhergehenden Ansprüche,
**dadurch gekennzeichnet**,
daß an der Unterseite eines jeden Hakenteils (8) mindestens eine Anformung (7) vorgesehen ist.

7. Verlegegitterplatte nach einem der vorhergehenden Ansprüche,
**dadurch gekennzeichnet**,
daß die Ausnehmung (25) in Bereich einer an der Innenseite des Außenrahmens (2) ausgebildeten Erhöhung (19) liegt bzw. dort endet.

8. Verlegegitterplatte nach Anspruch 7,
**dadurch gekennzeichnet**,
daß die Ausnehmung (25) von der einen Seitenkante des Bauteils von außen nach innen verläuft.

9. Verlegegitterplatte nach einen der vorhergehenden Ansprüche,
**dadurch gekennzeichnet**,
daß das Bauteil an der Unterseite quer- und/oder längsverlaufende Ausnehmungen (12) aufweist.

10. Verlegegitterplatte nach einem der vorhergehenden Ansprüche,
**dadurch gekennzeichnet**,
daß die einzelnen Durchführungen (6) bezüglich ihrer Tiefe gegeneinander versetzt angeordnete Quervorsprünge (13, 14) aufweisen.

11. Verlegegitterplatte nach einem der vorhergehenden Ansprüche,
**dadurch gekennzeichnet**,
daß in mindestens einer Durchführung (6) eine Halterung (15) mit eingeformt ist.

12. Verlegegitterplatte nach einem der vorhergehenden Ansprüche,
**dadurch gekennzeichnet**,
daß einzelne Durchführungen (6) an ihrer Oberseite mit einer Abdeckung (10) versehen sind.

13. Verlegegitterplatte nach einem der vorhergehenden Ansprüche,
**dadurch gekennzeichnet**,
daß Abstandshülsen (17) vorgesehen sind, die auf die Anformungen (7) aufsteckbar sind.

14. Verlegegitterplatte nach einem der vorhergehenden Ansprüche,
**dadurch gekennzeichnet**,
daß ein Verbindungselement (20) vorgesehen ist, welches in seiner Draufsicht keilförmig ausgebildet ist, die Kupplungseinrichtung nur an den Seitenflächen (21) angeordnet ist und die Seitenflächen (21) des Verbindungselementes (20) und die Länge der Seitenfläche (5) des Bauteils (1) entspricht.

15. Verlegegitterplatte nach einem der vorhergehenden Ansprüche,
**dadurch gekennzeichnet**,
daß ein Verbindungselement (22) vorgesehen ist, dessen zwei gegenüberliegende Seitenflächen (23) schräg verlaufend ausgebildet sind und die Länge der jeweiligen Seitenfläche der Länge der Seitenfläche (5) des Bauteils (1) entspricht.

16. Verlegegitterplatte nach einem der vorhergehenden Ansprüche,
**dadurch gekennzeichnet**,
daß das Bauteil (1) eine über die gesamte Fläche quer verlaufende Zwischenwandung (28) aufweist, die einen unteren Hohlraum (30) bildet und in der mindestens eine Entwässerungsöffnung (29) vorgesehen ist.

17. Verlegegitterplatte nach einem der vorhergehenden Ansprüche,
**dadurch gekennzeichnet**,
daß die Markierung der oberen Seite des jeweiligen Bauteils (1) über in die einzelnen Durchführungen (6) des Bauteils (1) einsteckbare Markierungsteile (27) erfolgt.

18. Verlegegitterplatte nach einem der vorhergehenden Ansprüche,
**dadurch gekennzeichnet**,
daß die Fixierung des Markierungsteils (27) innerhalb der Durchführung (6) durch Klemmung oder durch eine Nut/Federverbindung erfolgt.

19. Verlegegitterplatte nach einem der vorhergehenden Ansprüche,
**dadurch gekennzeichnet**,
daß neben dem Bauteil (1) weitere Bauteile (1', 1'') mit auf einer und/oder beiden Seiten halber Seitenlänge vorgesehen sind, für den Transport mehrere Bauteile (1) zu einem Flächenverbund bestimmter Größe verbunden werden, an dessen Unterseite die Bauteile (1', 1'') mit halber Seitenlänge angeordnet sind, die als Bodenstützen dienen und in deren Zwischenräume (31) ein Gabelstapler oder dgl. eingreifen kann.

20. Verlegegitterplatte nach Anspruch 19,
**dadurch gekennzeichnet**,
daß die Verbindung der Bauteile (1, 1' sowie 1'') in vertikaler Richtung über mindestens ein Spannband (32) erfolgt, welches die einzelnen Durchführungen (6) der Bauteile (1, 1', 1'') durchsetzt.

21. Verlegegitterplatte nach einem der vorhergehenden Ansprüche,
**dadurch gekennzeichnet**,
daß die Kunststoffmasse aus vorab zerkleinerten und anschließend eingeschmolzenen Kunststoffabfällen einen Pappanteil an Abfällen aufweist.

22. Verlegegitterplatte nach einem der vorhergehenden Ansprüche,
**dadurch gekennzeichnet**,
daß das Baute in quadratischer Ausführungsform folgende Abmessungen aufweist:
| | |
|---|---|
| - Gesamtlänge | 250 - 500 mm |
| - Länge einer Durchführung (6) | 50 - 70 mm |
| - Bauteiltiefe | 40 - 60 mm |
| - Stärke der Quer- (3) sowie Längsstreben (4) | 4 - 6 mm. |

23. Verlegegitterplatte nach mindestens einen der vorhergehenden Ansprüche,
**dadurch gekennzeichnet**,
daß neben dem Bauteil (1) mindestens ein Dehnfugenelement (39) vorgesehen ist, welches über entsprechend ausgebildete Hakenteile (8) bzw. Durchführungen (6) in den Verbund einzelner Bauteile (1) integriert ist und eine Form aufweist, die bei seitlicher Druckbeanspruchung wie eine Feder wirkt.

24. Verlegegitterplatte nach mindestens einem der vorhergehenden Ansprüche,
**dadurch gekennzeichnet**,
daß die Quer- (3) und/oder Längsstreben (4) einen von der Standfläche nach oben hin abnehmenden Durchmesser aufweisen.

25. Verfahren zum Verlegen der Verlegegitterplatten gemäß mindestens einem der vorangegangenen Ansprüche, dadurch gekennzeichnet,
daß die Bauteile vor dem Verlegen einzeln oder in Verbund besät oder begrünt werden und erst anschließend im besäten oder begrünten (bewachsenen) Zustand verlegt werden.

26. Verfahren zum Verlegen der Verlegegitterplatten nach Anspruch 25,
**dadurch gekennzeichnet**,
daß die Bauteile unmittelbar beim Verlegen durch Beschnitt in ihrer Form den örtlichen Gegebenheiten angepaßt werden.

## Claims

1. Transportable lattice panel, formed from previously comminuted and subsequently molten waste plastics materials which can be sprayed or poured into an appropriate mould, having a circumferential outer frame (2), on the lateral face (5) of which at least one coupling arrangement for connecting two adjacent lattice panels is provided, and having transverse struts (3) as well as longitudinal struts (4), which divide the interior of the outer frame (2) into a raster of individual cell-like openings (6), at least one hook-shaped member (8) being provided as a coupling arrangement on one external side of the outer frame (2), and an opening (6), which is open towards the upper or lower side, being provided in the same position on the side situated opposite the hook-shaped member (8), and the lattice panel (1) comprising at least one projection member (24) as a means for vertical locking,
**characterized**
- in that the hook-shaped member (8) comprises a transverse extension (10) and a longitudinal extension (11), whereby the longitudinal extension (11) connects the transverse extension (10) to the outer frame (2) and, when the components are interconnected, the longitudinal extension (11) extends through the opening (6), and the transverse extension (10) co-operates with the inner side of the outer frame (2), and
- in that the projection member or the projection members (24) is/are arranged on the inner side of the transverse extension (10) and engages/engage in at least one recess (25) when the lattice panels are interconnected, the projection member (24) being able to be pushed out of the recess (25) by the mutual displacement of two adjacent lattice panels to release the locking, and the projection member (24) and the recess (25) are disposed in the region of the coupling arrangements of the respective component.

2. Transportable lattice panel according to claim 1,
**characterized**
in that mouldings (7) are provided in a surface-to-surface distribution in the region of a main face of the component (1) at the intersections between the transverse struts (3), the longitudinal struts (4) and the outer frame (2).

3. Transportable lattice panel according to claim 1 or 2,
**characterized**
in that the mouldings (7) are provided at the intersections between the transverse struts (3), the longitudinal struts (4) and the outer frame (2).

4. Transportable lattice panel according to claims 1 - 3,
**characterized**
in that the transverse struts (3) and the longitudinal struts (4) terminate flush with the upper or lower side of the outer frame (2).

5. Transportable lattice panel according to one of the preceding claims,
**characterized**
in that at least the lower side of the hook-shaped member (8) terminates flush with the lower side of the outer frame (2).

6. Transportable lattice panel according to one of the preceding claims,
**characterized**
in that at least one moulding (7) is provided on the lower side of each hook-shaped member (8).

7. Transportable lattice panel according to one of the preceding claims,
**characterized**
in that the recess (25) lies in the region of a raised portion (19), which is provided on the internal side of the outer frame (2), or respectively ends there.

8. Transportable lattice panel according to claim 7,
**characterized**
in that the recess (25) extends from one lateral edge of the component from the outside inwardly.

9. Transportable lattice panel according to one of the preceding claims,
**characterized**
in that the component has recesses (12) extending transversely and/or longitudinally on the lower side.

10. Transportable lattice panel according to one of the preceding claims,
**characterized**
in that the individual openings (6) have transverse projection members (13, 14) which are disposed so as to be offset from one another in respect of their depth.

11. Transportable lattice panel according to one of the preceding claims,
**characterized**
in that a holder (15) is integrally moulded in at least one opening (6).

12. Transportable lattice panel according to one of the preceding claims,
**characterized**
in that individual openings (6) are provided with a cover (16) on their upper side.

13. Transportable lattice panel according to one of the preceding claims,
**characterized**
in that spacer sleeves (17) are provided which are mountable on the mouldings.

14. Transportable lattice panel according to one of the preceding claims, characterized in that a connection element (20) is provided, which has a wedge-shaped configuration when viewed from above, the coupling arrangement is only disposed on the lateral faces (21), and the lateral faces (21) of the connection element (20) and the length of the lateral face (5) of the component (1) are identical.

15. Transportable lattice panel according to one of the preceding claims,
**characterized**
in that a connection element (22) is provided, the two oppositely situated lateral faces (23) of which are configured so as to extend inclinedly, and the length of the respective lateral face corresponds to the length of the lateral face (5) of the component (1).

16. Transportable lattice panel according to one of the preceding claims,
**characterized**
in that the component (1) comprises an intermediate wall (28) which extends transversely over the entire face, said wall forming a lower cavity (30) and containing at least one drainage aperture (29).

17. Transportable lattice panel according to one of the preceding claims,
**characterized**
in that the marking of the upper side of the respective component (1) is effected via marking members (27), which are insertable into the individual openings (6) in the component (1).

18. Transportable lattice panel according to one of the preceding claims,
**characterized**
in that the securement of the marking member (27) internally of the opening (6) is effected by clamping or by a tongue-and-groove joint.

19. Transportable lattice panel according to one of the preceding claims,
**characterized**
in that, in addition to the component (1), further components (1', 1'') are provided having half side lengths on one and/or both sides, a plurality of components (1) are connected to form an assembly of faces of a predetermined size for transportation, on the lower side of which assembly the components (1', 1'') having half side lengths are disposed, such components sewing as base supports, and a fork lift truck or the like can engage in the intermediate spaces (31) of said components.

20. Transportable lattice panel according to claim 20,
**characterized**
in that the connection of the components (1', 1' as well as 1'') is effected in a vertical direction by at least one tensioning strap (32), which passes through the individual openings (6) in the components (1, 1', 1'').

21. Transportable lattice panel according to one of the preceding claims,
**characterized**
in that the mass of plastics material, comprising previously comminuted and subsequently molten waste Plastics materials, has a pulp-like proportion of waste materials.

22. Transportable lattice panel according to one of the preceding claims,
**characterized**
in that the component has the following dimension in quadratic form:
| | |
|---|---|
| - overall length | 250 - 500 mm |
| - length of an opening (6) | 50 - 70 mm |
| - component depth | 40 - 60 mm |
| - thickness of the transverse struts (3) and longitudinal struts (4) | 4 - 6 mm. |

23. Transportable lattice panel according to at least one of the preceding claims,
**characterized**
in that at least one Expansion joint element (39) is provided in addition to the component (1), said element being incorporated in the assembly of individual components (1) via appropriately configured hook-shaped members (8) or openings (6) and having a form which acts like a spring when lateral pressure is applied.

24. Transportable lattice panel according to at least one of the preceding claims,
**characterized**
in that the transverse struts (3) and/or longitudinal struts (4) have a diameter which decreases from the base upwardly.

25. Method of transporting the transportable lattice panels according to at least one of the preceding claims,
**characterized**
in that the components are sown or germinated, individually or in an assembly, prior to the transportation process and are only transported subsequently in the sown or germinated (grown) state.

26. Method of transporting transportable lattice panels according to claim 26,
**characterized**
in that the components are immediately adapted to the local conditions during the transportation process by being trimmed in respect of their configuration.

## Revendications

1. Plaque de grille de pose fabriquée en déchets de matières plastiques préalablement broyés, puis refondus, pouvant être injectés ou moulés dans une forme appropriée, comportant un cadre circonférentiel extérieur (2), dont la face latérale (5) est dotée d'au moins un dispositif d'accouplement destiné à assurer la liaison de deux grilles adjacentes, et comportant des entretoises transversales (3) et longitudinales (4) divisant l'espace intérieur du cadre extérieur (2) en un réseau de claires-voies cellulaires individuelles (6), les dispositifs d'accouplement étant respectivement constitués par au moins un élément de crochet (8) disposé sur chaque côté extérieur du cadre extérieur (2), et par une encoche (6) ouverte vers le haut ou vers le bas, disposée dans l'alignement de l'élément de crochet sur le côté opposé à l'élément de crochet (8), et en ce que la grille (1) comporte au moins une saillie (24) servant de moyen de verrouillage vertical,
**caractérisée**
- en ce que l'élément de crochet (8) se compose d'un prolongement transversal (10) et d'un prolongement longitudinal (11), le prolongement longitudinal (11) reliant le prolongement transversal (10) au cadre extérieur (2), et le prolongement longitudinal (11) s'étendant, lorsque les éléments de construction sont accouplés l'un à l'autre, à travers l'encoche (6), et le prolongement transversal (10) s'engageant sur la face intérieure du cadre extérieur (2), et
- en ce que la saillie ou les saillies est/sont prévue/s sur la face intérieure du prolongement transversal et s'engage/nt, lorsque des grilles sont accouplées l'une à l'autre, dans au moins un évidement (25), en ce que la saillie (24) peut être déboîtée de l'évidement (25) par déplacement antagoniste des deux grilles adjacentes, de manière à désengager le verrouillage, et en ce que la saillie (24) et l'évidement (25) sont respectivement agencés au niveau des dispositifs d'accouplement des éléments de construction concernés.

2. Grille de pose selon la revendication 1,
**caractérisée**
en ce que des appendices (7) répartis sur la surface sont prévus au niveau d'une surface principale de l'élément de construction (1), aux intersections entre les entretoises transversales (3) et longitudinales (4) et le cadre extérieur (2).

3. Grille de pose selon la revendication 1 ou 2,
**caractérisée**
en ce que les appendices (7) sont prévus aux intersections entre les entretoises transversales (3) et longitudinales (4) et le cadre extérieur (2).

4. Grille de pose selon les revendications 1 à 3,
**caractérisée**
en ce que les entretoises transversales (3) et longitudinales (4) arrivent respectivement à ras des faces supérieure ou inférieure du cadre extérieur (2).

5. Grille de pose selon l'une des revendications précédentes,
**caractérisée**
en ce qu'au moins la face inférieure de l'élément de crochet (8) se situe à ras de la face inférieure du cadre extérieur (2).

6. Grille de pose selon l'une des revendications précédentes,
**caractérisée**
en ce qu'au moins un appendice (7) est prévu à la face inférieure de chaque élément de crochet (8).

7. Grille de pose selon l'une des revendications précédentes,
**caractérisée**
en ce que l'évidement (25) se situe et se termine au niveau d'une saillie (19) conformée à la face intérieure du cadre extérieur (2).

8. Grille de pose selon la revendication 7,
**caractérisée**
en ce que l'évidement (25) s'étend de l'extérieur vers l'intérieur, depuis un bord latéral de l'élément de construction.

9. Grille de pose selon l'une des revendications précédentes,
**caractérisée**
en ce que l'élément de construction comporte, à sa face inférieure, des évidements (12) s'étendant transversalement et/ou longitudinalement.

10. Grille de pose selon l'une des revendications précédentes,
**caractérisée**
en ce que les différentes claires-voies (6) présentent des cloisons saillantes (13, 14) décalées les unes par rapport aux autres dans le sens de la profondeur.

11. Grille de pose selon l'une des revendications précédentes,
**caractérisée**
en ce qu'un support (15) est aménagé dans l'une au moins des claires-voies (6).

12. Grille de pose selon l'une des revendications précédentes,
**caractérisée**
en ce que des claires-voies individuelles (6) sont recouvertes, à leur face supérieure, par un couvercle (16).

13. Grille de pose selon l'une des revendications précédentes,
**caractérisée**
en ce que des douilles entretoises (17) sont prévues, qui peuvent être emmanchées sur les appendices (7).

14. Grille de pose selon l'une des revendications précédentes,
**caractérisée**
en ce qu'un élément de liaison (20) est prévu, qui, vu en plan, présente une forme de coin, que les dispositifs d'accouplement sont prévus uniquement sur les faces latérales (21), et que les faces latérales (21) de l'élément de liaison (20) correspondent à la longueur de la face latérale (5) de l'élément de construction (1).

15. Grille de pose selon l'une des revendications précédentes,
**caractérisée**
en ce qu'un élément de liaison (22) est prévu, dont les deux faces latérales opposées (23) s'étendent obliquement, et que la longueur des faces latérales respectives correspond à la longueur de la face latérale (5) de l'élément de construction (1).

16. Grille de pose selon l'une des revendications précédentes,
**caractérisée**
en ce que l'élément de construction (1) comporte une paroi transversale intermédiaire (28) s'étendant sur toute la surface de cet élément et formant une cavité (30), et en ce qu'au moins une ouverture de drainage (29) est prévue.

17. Grille de pose selon l'une des revendications précédentes,
**caractérisée**
en ce que le marquage de la face supérieure d'un élément de construction correspondant (1) s'effectue au moyen d'éléments de marquage (27) pouvant être emboîtés dans les différentes claires-voies (6) de l'élément de construction (1).

18. Grille de pose selon l'une des revendications précédentes,
**caractérisée**
en ce que la fixation de l'élément de marquage (27) à l'intérieur de la clairevoie (6) est réalisée par coincement ou par une liaison à rainure et languette.

19. Grille de pose selon l'une des revendications précédentes,
**caractérisée**
en ce qu'en dehors de l'élément de construction (1), d'autres éléments de construction (1', 1'') sont prévus, dont un et/ou les deux côtés présente(nt) une longueur de côté réduite de moitié, et que plusieurs éléments de constraction (1) sont reliés, pour le transport, en un ensemble plan d'une taille définie, à la face inférieure duquel sont disposés les éléments de construction (1', 1'') de longueur de côté réduite de moitié, ces éléments servant de pieds de support et formant des intervalles (31) dans lesquels peut s'engager la fourche d'un chariot élévateur ou similaire.

20. Grille de pose selon la revendication 19,
**caractérisée**
en ce que la liaison entre les éléments de construction (1, 1' et 1'') dans le sens vertical est effectuée au moyen d'au moins une sangle de serrage (32), qui passe par les différentes claires-voies (6) des éléments de construction (1, 1', 1'').

21. Grille de pose selon l'une des revendications précédentes,
**caractérisée**
en ce que la masse de matière plastique composée de déchets de matières plastiques préalablement broyés, puis refondus, contient une part de déchets de carton.

22. Grille de pose selon l'une des revendications précédentes,
**caractérisée**
en ce que l'élément de construction réalisé en une forme carrée présente les dimensions suivantes:
| | |
|---|---|
| - longueur totale | 250 à 500 mm |
| - longueur d'une claire-voie (6) | 50 à 70 mm |
| - profondeur de l'élément de construction | 40 à 60 mm |
| - épaisseur des entretoises transversales (3) et longitudinales (4) | 4 à 6 mm. |

23. Grille de pose selon l'une au moins des revendications précédentes, **caractérisée**
en ce qu'à côté de l'élément de construction (1), au moins un élément de joint de dilatation (39) est prévu, qui est intégré dans l'ensemble des différents éléments de construction (1) au moyen d'éléments de crochet (8) et d'encoches (6), et qui présente une forme agissant comme un ressort en cas de sollicitation en pression latérale.

24. Grille de pose selon l'une au moins des revendications précédentes, **caractérisée**
en ce que les entretoises transversales (3) et/ou longitudinales (4) présentent une section diminuant, depuis le plan de pose, vers le haut.

25. Procédé de pose de grilles de pose selon l'une au moins des revendications précédentes,
**caractérisé**
en ce que les éléments de construction sont ensemencés ou gazonnés, individuellement ou par ensembles, avant la pose, et qu'ils ne sont posés qu'ensuite, à l'état ensemencé ou gazonné (couvert de gazon).

26. Procédé de pose de grilles de pose selon la revendication 25,
**caractérisé**
en ce que la forme des éléments de construction est adaptée à la situation locale par découpe sur place, lors de la pose.
